# EUROPÄISCHE PATENTSCHRIFT

(11) **EP 3 162 808 B1**
(45) Veröffentlichungstag und Bekanntmachung des Hinweises auf die Patenterteilung: **24.01.2018**
(21) Anmeldenummer: 15191373.8
(22) Anmeldetag: 26.10.2015
(51) Int. Cl.: C07F 15/00

(54) **CISPLATIN(BIS-TOSYLAT) UND DESSEN HYDRATE**
CISPLATIN (TO TOSYLAT) AND HYDRATES THEREOF
CISPLATINE (BIS-TOSYLATE) ET SES HYDRATES

(43) Veröffentlichungstag der Anmeldung: 03.05.2017
(73) Patentinhaber: Heraeus Deutschland GmbH & Co. KG, 63450 Hanau (DE)
(72) Erfinder: JOST, Steffen, 63584 GRÜNDAU (DE); BINDERNAGEL, Holger, 63571 GELNHAUSEN (DE); RAUTER, Holger, 36103 FLIEDEN (DE)
(74) Vertreter: Heraeus IP

(56) Entgegenhaltungen:
- EP-A1- 2 740 737
- PAUL SCHWARTZ ET AL: "Preparation and antitumor evaluation of water-soluble derivatives of dichloro(1,2-diaminocyclohexane)platinum(I I)", CANCER TREATMENT REPORTS, US GOV. PRINT. OFF, US, Bd. 61, Nr. 8, 1. November 1977 (1977-11-01), Seiten 1519-1525, XP008160398, ISSN: 0361-5960
- D. F. LONG ET AL: "Review article cisplatin: Chemistry, distribution and biotransformation", BIOPHARMACEUTICS AND DRUG DISPOSITION., Bd. 2, Nr. 1, 1. Januar 1981 (1981-01-01), Seiten 1-16, XP055237119, US ISSN: 0142-2782, DOI: 10.1002/bdd.2510020102
- ABU-SURRAH ADNAN SALIM ET AL: "Platinum group antitumor chemistry: design and development of new anticancer drugs complementary to cisplatin", CURRENT MEDICINAL CHEMISTRY, BENTHAM SCIENCE PUBLISHERS, NL, Bd. 13, Nr. 11, 1. Mai 2006 (2006-05-01), Seiten 1337-1357, XP009131401, ISSN: 0929-8673, DOI: 10.2174/092986706776872970

## Beschreibung

Seit der Entdeckung der zytostatischen Wirkung von Cisplatin ((SP-4-2)-Diammindichloroplatin(II)) spielen Platinkomplexe eine wichtige Rolle bei der Erforschung und Entwicklung von Antitumorwirkstoffen. Die Wirkung der Platinkomplexe beruht auf einer Hemmung der DNA-Replikation durch Querverknüpfungen zweier benachbarter Guanin-Basen eines DNA-Strangs. So wird die Struktur der DNA gestört und dadurch funktionsunfähig. Der Zellstoffwechsel kommt zum Erliegen und die Zelle leitet die Apoptose ein.

Der Platinkomplex Cisplatin weist üblicherweise zwei cis-ständige stabile Amminliganden und zwei labile Chloroliganden auf. Im menschlichen Körper reagiert Cisplatin mit Wasser unter Abspaltung der labilen Chloroliganden. Die so gebildeten Diammindiaquaplatin(II)-Komplexe reagieren mit der DNA innerhalb der Zellen und führen letztendlich zum Zelltod.

Während der Lagerung kann es zu Reaktionen kommen, durch die Cisplatin abgebaut wird, mit der Folge, dass es zu einer Verringerung der Wirkstoffkonzentration und zur Anreicherung von Verunreinigungen kommt. Gemäß den internationalen Arzneibüchern sind von Cisplatin die Verunreinigungen A, B, und C bekannt.

Bei Verunreinigung A handelt es sich um Transplatin.

Bei Verunreinigung B handelt es sich um Kalium-Trichloroamminplatinat.

Bei Verunreinigung C handelt es sich um Tetrachloroplatinat.

Als Referenzstandard zur quantitativen Bestimmung der Abbauprodukte von Cisplatin wird gemäß den internationalen Arzneibüchern hochreines Cisplatin selbst verwendet. Dieser Standard bildet beim Lösen in Wasser den genannten Diammindiaquaplatin(II)-Komplex. Nachteilig bei der Verwendung von Cisplatin selbst ist die niedrige Löslichkeit der Substanz in Wasser (ca. 2,5 mg/mL bei 20°C). Dadurch lassen sich auch die Referenzstandards nur in niedriger Konzentration ansetzen. In der weiteren Folge gemachte Angaben zur Löslichkeit beziehen sich jeweils auf die Löslichkeit in Wasser bei 20 °C. EP2740737 beschreibt die Verwendung von 1,2-Cyclohexandiaminplatin(II)bis-(4-methylbenzolsulfonat) als HPLC Referenzstandard. Es besteht der Bedarf an cis-Diamminplatin(II)-Verbindungen, welche in Wasser einen Diammindiaquaplatin(II)-Komplex ausbilden und im Vergleich zu Cisplatin eine verbesserte Löslichkeit in Wasser aufweisen.

Die Aufgabe wird gelöst durch eine Verbindung der Form (SP-4-2)-Diammin-bis-(4-methylbenzolsulfonato)platin(II)x(H₂O)ₙ mit n = 0 bis 5, (im Folgenden ohne Berücksichtigung von etwaigem Hydratwasser bzw. dessen Mengenanteil kurz als "Cisplatin(bis-tosylat)" bezeichnet), sowie ein Verfahren zu deren Herstellung. Cisplatin(bis-tosylat) zeigt eine bessere Löslichkeit in Wasser als Cisplatin und es erlaubt die Herstellung von Lösungen eines Diammindiaquaplatin(II)-Komplexes wie im vorstehenden Absatz genannt in erwünschter höherer Konzentration. Cisplatin(bis-tosylat) kann sowohl unhydratisiert als auch in Form beispielsweise ein- oder mehrwertiger Hydrate vorliegen. Im Falle von Hydraten kann der Index n beispielsweise Werte im Bereich von 1 bis 5 annehmen, dabei insbesondere ganze Zahlenwerte. Unter den Hydraten von Cisplatin(bis-tosylat) ist das Dihydrat bevorzugt. Das Cisplatin(bis-tosylat)dihydrat((SP-4-2)-Diammin-bis-(4-methylbenzolsulfonato)platin(II)x(H₂O)₂) kann eine Wasserlöslichkeit von etwa 220 mg/mL (bei 20 °C) aufweisen. Somit kann eine - gegenüber Cisplatin - um den Faktor 88 höhere Löslichkeit in Wasser erzielt werden.

Tabelle 1 zeigt Platin- und Wassergehalte von Cisplatin(bis-tosylat)an-, -mono- und -dihydrat.

**Tabelle 1: Gemessene und berechnete Werte des Platin- und Wassergehalts für Cisplatin(bis-tosylat)anhydrat und ausgewählte Hydrate**

| | **Platingehalt (ICP-MS, Gew.-%)** | **Platingehalt (Theorie, Gew.-%)** | **H₂O-Gehalt (Karl Fischer, Gew.-%)** | **H₂O-Gehalt (Theorie, Gew.-%)** |
|---|---|---|---|---|
| Cisplatin(bis-tosylat) Anhydrat | 34,03 | 34,13 | 0 | 0 |
| Cisplatin(bis-tosylat) x H₂O | 33,22 | 33,09 | 3,00 | 3,06 |
| Cisplatin(bis-tosylat) x 2 H₂O | 32,28 | 32,11 | 5,97 | 5,93 |

Bevorzugtes Hydrat ist das Cisplatin(bis-tosylat)dihydrat. Cisplatin(bis-tosylat)dihydrat lässt sich mittels Pulver-Röntgendiffraktometrie analysieren und kann die nachfolgenden charakteristischen 2θ-Signale mit einer Abweichung von ± 0,2 aufweisen.

**Tabelle 2: Charakteristische Beugungswinkel 2θ im Pulver-Röntgendiffraktogramm (XRPD) von Cisplatin(bis-tosylat)dihydrat.**

| 2θ |
|---|
| 5,39 |
| 16,65 |
| 19,13 |
| 20,80 |
| 21,64 |
| 22,32 |
| 23,16 |
| 24,43 |
| 31,91 |
| 32,85 |

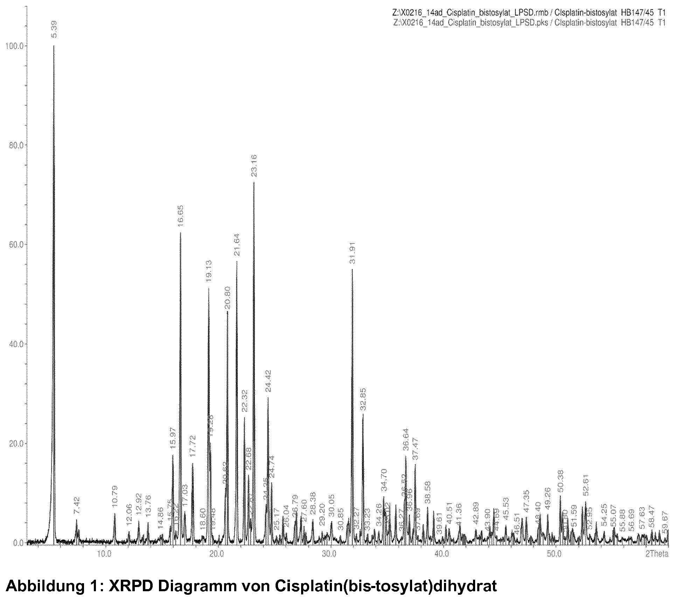

Tabelle 2 zeigt eine Liste der charakteristischen Beugungswinkel 2θ im Pulver-Röntgendiffraktogramm von Cisplatin(bis-tosylat)dihydrat. Die Werte können mit einem Zweikreis-Röntgenpulverdiffraktometer der Fa. Stoe & Cie Darmstadt in Transmission mit einem gebogenen Ge-Monochromator (111) und Cu-K α₁ Strahlung = 1,540598 Angström gemessen werden (siehe Abbildung 1).

Das erfindungsgemäße Cisplatin(bis-tosylat) kann in hoher Reinheit hergestellt werden. Die Reinheit des Cisplatin(bis-tosylats) kann analog der Methode für Cisplatin, beschrieben in EP 8 (European Pharmacopoeia 8 - Monograph Cisplatin 01/2009:0599) mittels Hochdruckflüssigchromatographie (HPLC, Testmethode: related substances)) bestimmt werden. Die Reinheit kann über 95%, insbesondere über 98% liegen, bezogen auf die Gesamtfläche der HPLC-Signale. In Tabelle 3 ist beispielhaft die Messung der Reinheit (gemäß HPLC) für Cisplatin(bis-tosylat)dihydrat dargestellt.

**Tabelle 3: HPLC-Reinheit¹⁾ Cisplatin(bis-tosylat)dihydrat**

| **Signal / relative Retentionszeit [min/min.]** | **% Fläche** |
|---|---|
| 0,66 | 0,09 |
| 1,00 | 98,09 |
| 1,08 | 1,08 |
| 2,20 | 0,63 |

| | |
|---|---|
| ¹⁾ Cisplatin HPLC-Methode nach EP 8, Probe in Wasser gelöst, nur Peaks ≥ 0.03 % Fläche | |

Cisplatin(bis-tosylat) und dessen Hydrate lassen sich gemäß dem nachstehend beschriebenen ebenfalls einen Gegenstand der Erfindung darstellenden Verfahren herstellen.

Zuerst wird eine Reaktionsmischung aufweisend oder bestehend aus Cisplatin, Silber(I)(4-methylbenzolsulfonat) (auch Silber-tosylat genannt) und ein wässriges Lösungsmittel bereitgestellt. Der Mengenanteil des Cisplatins in der Reaktionsmischung kann im Bereich von 0,1 bis 10 mg/mL liegen, bevorzugt im Bereich von 0,5 bis 2,5 mg/mL. Der Mengenanteil von Silber(I)(4-methylbenzolsulfonat) in der Reaktionsmischung kann 0,90 - 0,99 molare Äquivalente (äq.), bevorzugt 0,95 - 0,99 äq. betragen, bezogen auf die Chloroliganden des Cisplatins. Das wässrige Lösungsmittel kann Wasser sein oder mindestens 90 Vol.-% Wasser enthalten. Neben Wasser kann das wässrige Lösungsmittel mit Wasser mischbare organische Lösungsmittel wie z.B. Alkohole enthalten. Bevorzugt ist das wässrige Lösungsmittel Wasser.

Anschließend wird die Reaktionsmischung auf eine Temperatur T1 im Bereich von 30 bis 80°C gebracht. Dabei kann die Reaktionsmischung kontinuierlich oder diskontinuierlich durchmischt werden, z.B. durch Rühren. Vorzugsweise kann die Reaktionsmischung auf eine Temperatur T1 im Bereich von 50 bis 60°C gebracht werden. Die Reaktionsdauer kann dabei 1 - 50 Stunden betragen, insbesondere 12 - 24 Stunden.

Anschließend wird die Reaktionsmischung auf eine Temperatur T2 im Bereich von -10 bis +15°C, insbesondere im Bereich von 0 bis 10°C, abgekühlt. Optional kann die Reaktionsmischung nach dem Abkühlen noch 0,1 - 24 h nachgerührt werden.

Entstandener Feststoff, der überwiegend Silberchlorid enthalten kann, wird aus der Reaktionsmischung abgetrennt. Das Abtrennen kann z.B. durch Filtration, Dekantieren oder Zentrifugieren erfolgen.

Die nach Abtrennen von Feststoff erhaltene Lösung kann optional mit 0,5 bis 5 Gew.-% eines Adsorbers, bezogen auf ursprünglich eingesetztes Cisplatin, in Kontakt gebracht werden, z.B. um Reste von Silber aus der Lösung zu entfernen. Im Rahmen der Erfindung wird der Begriff Adsorber für Materialien verwendet, die in der Lage sind, kolloidal gelöstes Metall und Metallkationen aus einer Lösung zu binden. Als Adsorber können z.B. Zeolithe oder Aktivkohle verwendet werden. Die Adsorber-haltige Lösung kann zusätzlich durchmischt werden, z.B. durch Rühren für 1 - 120 Minuten.

Anschließend kann der Adsorber nach bekannten Verfahren, z.B. durch Filtration, aus der Lösung entfernt werden.

Auf diese Weise kann ein Filtrat hergestellt werden, das gelöstes Reaktionsprodukt Cisplatin(bis-tosylat) aufweist. Aus der erhaltenen Lösung kann das Cisplatin(bis-tosylat) isoliert werden. Dies kann zum Beispiel durch Verdampfen des wässrigen Lösungsmittels oder des Lösungsmittels Wasser unter vermindertem Druck geschehen.

Um die Reinheit weiter zu erhöhen, kann das erfindungsgemäße Cisplatin(bis-tosylat) beispielsweise umkristallisiert oder umgelöst werden. Das Umkristallisieren oder Umlösen kann selbstverständlich auch als eigenständiges Reinigungsverfahren für Cisplatin(bis-tosylat) eingesetzt werden, unabhängig von dessen Herkunft bzw. Herstellungsweise.

Die Reinigung von Cisplatin(bis-tosylat) kann erfolgen durch ein Verfahren umfassend die oder bestehend aus der Schrittfolge i) bis v):
i) Bereitstellen einer Mischung von Cisplatin(bis-tosylat), Wasser und Aceton, wobei das Volumenverhältnis von Wasser:Aceton im Bereich von 1:2 bis 2:1 liegt,
ii) Einstellen der Mischung auf eine Temperatur T3 im Bereich von 25 - 56°C, insbesondere im Bereich von 40 - 50°C,
iii) Zugabe eines 2- bis 30-fachen Gewichtsanteils an Aceton zur Mischung, bezogen auf die in Schritt i) eingesetzte Menge an Wasser,
iv) Einstellen der in Schritt iii) erhaltenen Mischung auf eine Temperatur T4 im Bereich von 0 - 25°C, bevorzugt im Bereich von 5 - 20°C,
v) Isolieren des Feststoffs aus der Mischung.

Der Mengenanteil von Cisplatin(bis-tosylat) in der in Schritt i) bereitgestellten Mischung kann im Bereich von 0,1 bis 500 mg/mL liegen. Bevorzugt liegt der Mengenanteil im Bereich von 1 bis 250 mg/mL.

Das Volumenverhältnis von Wasser:Aceton in Schritt i) kann bevorzugt im Bereich von 1:1,2 bis 1,2:1 liegen.

Bevorzugt kann Aceton in Schritt iii) in 10 bis 20-fachem Gewichtsanteil zugegeben werden. Die in Schritt iv) eingestellte Temperatur T4 kann beispielsweise für 0,5 - 36 Stunden gehalten werden.

Nach dem Fachmann bekannten Methoden kann Hydratwasser aus dem in Schritt v) isolierten Feststoff bzw. aus Hydraten von Cisplatin(bis-tosylat) ausgetrieben werden.

Das erfindungsgemäße Cisplatin(bis-tosylat) beziehungsweise das nach dem erfindungsgemäßen Verfahren herstellbare Cisplatin(bis-tosylat) kann neben seiner Eignung als Referenzstandard, insbesondere als HPLC- Standard eingesetzt werden.

### Beispiel 1 (Herstellung von Cisplatin(bis-tosylat))

Es wurde eine Suspension von Cisplatin in Wasser hergestellt (1 mg/mL) und hierzu 0.97 äq festes Silber(I)(4-methylbenzolsulfonat) (bezogen auf die Chloroliganden) zugegeben. Das Gemisch wurde unter Lichtausschluss bei 55°C für 23 Stunden gerührt. Anschließend wurde auf 3°C abgekühlt und eine Stunde nachgerührt. Bei der Reaktion entstandenes festes Silberchlorid wurde abfiltriert und anschließend das Filtrat mit 4 Gew.-% Aktivkohle, bezogen auf das eingesetzte Cisplatin, gerührt und anschließend nochmals filtriert. Das erhaltene Filtrat wurde bei Raumtemperatur im Membranpumpenvakuum bis zur Gewichtskonstanz eingeengt.

### Beispiel 2 (Reinigung von Cisplatin(bis-tosylat))

Gemäß Beispiel 1 hergestelltes Cisplatin(bis-tosylat) wurde mit einer Mischung aus Wasser und Aceton (1:1, v/v) aufgenommen (100 mg Cisplatin(bis-tosylat) pro mL) und auf 45°C erwärmt. Bei dieser Temperatur wurde langsam eine 15-fache Gewichtsmenge an Aceton, bezogen auf eingesetztes Wasser, zugegeben und innerhalb von 3 Stunden auf 20°C abgekühlt.

Anschließend wurde für 16 Stunden weitergerührt. Der entstandene Niederschlag wurde abfiltriert und im Membranpumpenvakuum bei Raumtemperatur bis zur Gewichtskonstanz getrocknet. Die Ausbeute lag bei 88%. Der Platingehalt des so erhaltenen Cisplatin(bis-tosylat)dihydrats wurde mittels ICP-MS (Inductive coupled plasma - mass spectroscopy) ermittelt und der Wassergehalt nach Karl Fischer (coulometrisch mit einem KF Coulometer 756, Oven Sample Processor 774 und Rührer 728, Metrohm GmbH, Deutschland,) bestimmt:

| | |
|---|---|
| **Platingehalt (ICP-MS)** | 32,28 Gew.-% |
| **Wassergehalt (Karl Fischer)** | 5,97 Gew.-% |

## Patentansprüche

1. (SP-4-2)-Diammin-bis-(4-methylbenzolsulfonato)platin(II)x(H₂O)ₙ mit n = 0 bis 5.

2. (SP-4-2)-Diammin-bis-(4-methylbenzolsulfonato)platin(II)x(H₂O)ₙ gemäß Anspruch 1,
**dadurch gekennzeichnet,**
**dass** der Index n Werte im Bereich von 1 bis 5 annimmt.

3. (SP-4-2)-Diammin-bis-(4-methylbenzolsulfonato)platin(II)x(H₂O)ₙ gemäß Anspruch 2,
**dadurch gekennzeichnet,**
**dass** der Index n ganzzahlige Werte im Bereich von 1 bis 5 annimmt.

4. (SP-4-2)-Diammin-bis-(4-methylbenzolsulfonato)platin(II)x(H₂O)ₙ gemäß Anspruch 3,
**dadurch gekennzeichnet,**
**dass** der Index n = 2 ist.

5. Kristallines (SP-4-2)-Diammin-bis-(4-methylbenzolsulfonato)platin(II)x(H₂O)ₙ gemäß einem der vorhergehenden Ansprüche.

6. Kristallines (SP-4-2)-Diammin-bis-(4-methylbenzolsulfonato)platin(II)x(H₂O)₂ gemäß Anspruch 4,
**dadurch gekennzeichnet,**
**dass** sein Pulver-Röntgen-Diffraktogramm die folgenden 2θ Signale ± 0,2 aufweist:
| **2θ** |
|---|
| 5,39 |
| 16,65 |
| 19,13 |
| 20,80 |
| 21,64 |
| 22,32 |
| 23,16 |
| 24,43 |
| 31,91 |
| 32,85 |

7. Verfahren zur Herstellung von (SP-4-2)-Diammin-bis-(4-methylbenzolsulfonato)platin(II)x(H₂O)ₙ mit n = 0 bis 5, aufweisend die oder bestehend aus der Schrittfolge a) bis d):
a) Bereitstellen einer Reaktionsmischung aufweisend oder bestehend aus Cisplatin, Silber(I)(4-methylbenzolsulfonat) in einem Mengenanteil von 0,90 - 0,99 äq. bezogen auf die Chloroliganden des Cisplatins und ein wässriges Lösungsmittel,
b) Erwärmen der Reaktionsmischung auf eine Temperatur T1 im Bereich von 30 bis 80°C,
c) Abkühlen der Reaktionsmischung auf eine Temperatur T2 im Bereich von -10 bis +15°C, und
d) Abtrennen von entstandenem Feststoff aus der Reaktionsmischung.

8. Verfahren gemäß Anspruch 7,
**dadurch gekennzeichnet, dass** der Mengenanteil von Cisplatin in der Reaktionsmischung in Schritt a) im Bereich von 0,1 bis 10 mg/mL liegt.

9. Verfahren gemäß Anspruch 7 oder 8,
**dadurch gekennzeichnet,**
**dass** das wässrige Lösungsmittel 90 Vol.-% Wasser enthält oder Wasser ist.

10. Verfahren gemäß einem der Ansprüche 7 bis 9,
**dadurch gekennzeichnet,**
**dass** die in Schritt d) erhaltene Lösung mit einem Adsorber in Kontakt gebracht und der Adsorber anschließend aus der Lösung abgetrennt wird.

11. Verfahren zur Reinigung von (SP-4-2)-Diammin-bis-(4-methylbenzolsulfonato)platin(II)x(H₂O)ₙ mit n = 0 bis 5 umfassend die oder bestehend aus der Schrittfolge i) bis v):
i) Bereitstellen einer Mischung von (SP-4-2)-Diammin-bis-(4-methylbenzolsulfonato)platin(II)x(H₂O)ₙ mit n = 0 bis 5 hergestellt gemäß einem Verfahren eines der Ansprüche 7 bis 10 oder beliebiger Herkunft, Wasser und Aceton, wobei das Volumenverhältnis von Wasser:Aceton im Bereich von 1:2 bis 2:1 liegt,
ii) Einstellen der Mischung auf eine Temperatur T3 im Bereich von 25 - 56°C,
iii) Zugabe eines 2- bis 30-fachen Gewichtsanteils an Aceton zur Mischung, bezogen auf die in Schritt i) eingesetzte Menge an Wasser,
iv) Einstellen der in Schritt iii) erhaltenen Mischung auf eine Temperatur T4 im Bereich von 0 - 25°C,
v) Isolieren des Feststoffs aus der Mischung.

12. Verfahren gemäß Anspruch 11,
**dadurch gekennzeichnet,**
**dass** der Anteil an (SP-4-2)-Diammin-bis-(4-methylbenzolsulfonato)platin(II)x(H₂O)ₙ mit n = 0 bis 5 in der in Schritt i) bereitgestellten Mischung 0,1 bis 500 mg/mL beträgt.

13. Verwendung von (SP-4-2)-Diammin-bis-(4-methylbenzolsulfonato)platin(II)x(H₂O)ₙ gemäß einem der Ansprüche 1 bis 6 oder erhalten nach einem Verfahren gemäß einem der Ansprüche 7 bis 12 als Referenzstandard.

14. Verwendung gemäß Anspruch 13 als Referenzstandard für HPLC-Anwendungen.

## Claims

1. (SP-4-2)-Diammine-bis-(4-methylbenzenesulfonato)platinum(II)x(H₂O)ₙ, whereby n = 0 to 5.

2. (SP-4-2)-Diammine-bis-(4-methylbenzenesulfonato)platinum(II)x(H₂O)ₙ according to claim 1,
**characterised in that**
index n takes on values in the range of 1 to 5.

3. (SP-4-2)-Diammine-bis-(4-methylbenzenesulfonato)platinum(II)x(H₂O)ₙ according to claim 2,
**characterised in that**
index n takes on integral values in the range of 1 to 5.

4. (SP-4-2)-Diammine-bis-(4-methylbenzenesulfonato)platinum(II)x(H₂O)ₙ according to claim 3,
**characterised in that**
index n = 2.

5. Crystalline (SP-4-2)-diammine-bis-(4-methylbenzenesulfonato)platinum(II)x(H₂O)ₙ according to any one of the preceding claims.

6. Crystalline (SP-4-2)-diammine-bis-(4-methylbenzenesulfonato)platinum(II)x(H₂O)ₙ according to claim 4,
**characterised in that**
its powder X-ray diffractogram comprises the following 2Θ signals ± 0.2:
| **2Θ** |
|---|
| 5.39 |
| 16.65 |
| 19.13 |
| 20.80 |
| 21.64 |
| 22.32 |
| 23.16 |
| 24.43 |
| 31.91 |
| 32.85 |

7. Process for the production of (SP-4-2)-diammine-bis-(4-methylbenzenesulfonato)platinum(II)x(H₂O)ₙ, whereby n = 0 to 5, comprising or consisting of the sequence of steps a) to d):
a) Providing a reaction mixture comprising or consisting of cisplatin, silver(I) (4-methylbenzenesulfonate) at a mass fraction of 0.90-0.99 eq., relative to the chloro ligands of cisplatin, and an aqueous solvent;
b) heating the reaction mixture to a temperature T1 in the range of 30 to 80°C;
c) cooling the reaction mixture to a temperature T2 in the range of -10 to +15°C; and
d) separating the solid thus produced from the reaction mixture.

8. Process according to claim 7,
**characterised in that** the mass fraction of cisplatin in the reaction mixture in step a) is in the range of 0.1 to 10 mg/mL.

9. Process according to claim 7 or 8,
**characterised in that**
the aqueous solvent contains 90% by volume water or is water.

10. Process according to any one of the claims 7 to 9,
**characterised in that**
the solution obtained in step d) is contacted to an adsorber and the adsorber is subsequently separated from the solution.

11. Process for the purification of (SP-4-2)-diammine-bis-(4-methylbenzenesulfonato)platinum(II)x(H₂O)ₙ, whereby n = 0 to 5, comprising or consisting of the sequence of steps i) to v):
i) Providing a mixture of (SP-4-2)-diammine-bis-(4-methylbenzenesulfonato)platinum(II)x(H₂O)ₙ, whereby n = 0 to 5, produced according to a process according to any one of the claims 7 to 10 or of any origin, water, and acetone, whereby the volume ratio of water:acetone is in the range of 1:2 to 2:1;
ii) adjusting the mixture to a temperature T3 in the range of 25 - 56°C;
iii) adding a 2- to 30-fold weight fraction of acetone to the mixture, relative to the amount of water used in step i);
iv) adjusting the mixture obtained in step iii) to a temperature T4 in the range of 0 - 25°C;
v) isolating the solid from the mixture.

12. Process according to claim 11,
**characterised in that**
the fraction of (SP-4-2)-diammine-bis-(4-methylbenzenesulfonato)platinum(II)x(H₂O)ₙ, whereby n = 0 to 5, in the mixture provided in step i) is 0.1 to 500 mg/mL.

13. Use of (SP-4-2)-diammine-bis-(4-methylbenzenesulfonato)platinum(II)x(H₂O)ₙ according to any one of the claims 1 to 6 or obtained according to a process according to any one of the claims 7 to 12 as a reference standard.

14. Use according to claim 13 as a reference standard for HPLC applications.

## Revendications

1. (SP-4-2)-Diammine-bis-(4-méthylbenzènesulfonato)platine(II)x(H₂O)ₙ avec n = 0 à 5.

2. (SP-4-2)-Diammine-bis-(4-méthylbenzènesulfonato)platine(II)x(H₂O)ₙ selon la revendication 1,
**caractérisé en ce**
**que** l'indice n accepte des valeurs dans la région de 1 à 5.

3. (SP-4-2)-Diammine-bis-(4-méthylbenzènesulfonato)platine(II)x(H₂O)ₙ selon la revendication 2,
**caractérisé en ce**
**que** l'indice n accepte des valeurs entières dans la région de 1 à 5.

4. (SP-4-2)-Diammine-bis-(4-méthylbenzènesulfonato)platine(II)x(H₂O)ₙ selon la revendication 3,
**caractérisé en ce**
**que** l'indice n est = 2.

5. (SP-4-2)-Diammine-bis-(4-méthylbenzènesulfonato)platine(II)x(H₂O)ₙ cristallin selon une des revendications précédentes.

6. (SP-4-2)-Diammine-bis-(4-méthylbenzènesulfonato)platine(II)x(H₂O)ₙ cristallin selon la revendication 4,
**caractérisé en ce**
**que** son diffractogramme de rayons X par les poudres présente les signaux 2θ suivants +/- 0,2 :
| **2θ** |
|---|
| 5,39 |
| 16,65 |
| 19,13 |
| 20,80 |
| 21,64 |
| 22,32 |
| 23,16 |
| 24,43 |
| 31,91 |
| 32,85 |

7. Procédé de fabrication de (SP-4-2)-diammine-bis-(4-méthylbenzènesulfonato)platine(II)x(H₂O)ₙ avec n = 0 à 5, présentant la ou constitué de la succession d'étapes a) à d) :
a) mise à disposition d'un mélange réactionnel présentant ou constitué du (4-méthylbenzènesulfonate) d'argent(I) de cisplatine en une proportion quantitative de 0,90 à 0,99 éq. par rapport aux chloroligands du cisplatine et un solvant aqueux,
b) chauffage du mélange réactionnel à une température T1 dans la région de 30 à 80°C,
c) refroidissement du mélange réactionnel à une température T2 dans la région de -10 à +15°C, et
d) séparation du solide apparu du mélange réactionnel.

8. Procédé selon la revendication 7,
**caractérisé en ce que** la proportion quantitative de cisplatine dans le mélange réactionnel à l'étape a) se situe dans la région de 0,1 à 10 mg/ml.

9. Procédé selon la revendication 7 ou 8,
**caractérisé en ce**
**que** le solvant aqueux contient 90 % en vol. d'eau ou est de l'eau.

10. Procédé selon une des revendications 7 à 9,
**caractérisé en ce**
**que** la solution obtenue à l'étape d) est amenée en contact avec un adsorbeur et l'adsorbeur est ensuite séparé de la solution.

11. Procédé de purification de (SP-4-2)-diammine-bis-(4-méthylbenzènesulfonato)platine(II)x(H₂O)ₙ avec n = 0 à 5 comprenant la ou constitué de la succession d'étapes i) à v) :
i) mise à disposition d'un mélange de (SP-4-2)-diammine-bis-(4-méthylbenzènesulfonato)platine(II)x(H₂O)ₙ avec n = 0 à 5 fabriqué selon un procédé d'une des revendications 7 à 10 ou de provenance quelconque, d'eau et d'acétone, dans lequel le rapport volumique d'eau/acétone se situe dans la région de 1/2 à 2/1,
ii) réglage du mélange à une température T3 dans la région de 25 à 56°C,
iii) addition d'une proportion pondérale de 2 à 30 fois d'acétone au mélange, par rapport à la quantité d'eau utilisée à l'étape i),
iv) réglage du mélange obtenu à l'étape iii) à une température T4 dans la région de 0 à 25°C,
v) isolation du solide du mélange.

12. Procédé selon la revendication 11,
**caractérisé en ce**
**que** la proportion de (SP-4-2)-diammine-bis-(4-méthylbenzènesulfonato)platine(II)x(H₂O)ₙ avec n = 0 à 5 dans le mélange mis à disposition à l'étape i) est de 0,1 à 500 mg/ml.

13. Utilisation de (SP-4-2)-diammine-bis-(4-méthylbenzènesulfonato)platine(II)x(H₂O)ₙ selon une des revendications 1 à 6 ou obtenu selon un procédé selon une des revendications 7 à 12 comme étalon de référence.

14. Utilisation selon la revendication 13 comme étalon de référence pour applications de CLHP.
